# EUROPEAN PATENT APPLICATION

(11) **EP 3 696 877 A1**
(43) Date of publication of application: **19.08.2020**
(21) Application number: 19157714.7
(22) Date of filing: 18.02.2019
(51) Int. Cl.: H01M 2/10, H01M 2/20, H01M 10/6553, H01M 10/6556, H01M 10/6551, H01M 10/6567, H01M 10/6561, H01M 10/613

(54) **BATTERY MODULE**

(71) Applicant: 3M Innovative Properties Company, Saint Paul, MN 55133-3427 (US)
(72) Inventor: Stuetz, Harald, 8020 Graz (AT); Brunnsteiner, Bernhard, 8020 Graz (AT); Suzzi, Daniele, 8020 Graz (AT)
(74) Representative: Mössner, Brigitte

(57) **Abstract**

The present disclosure relates to battery modules for a propulsion battery system of an electrical or hybrid-electrical vehicle, in particular to busbars having surfaces or a mesh of wires for contacting a cooling fluid to provide a larger contact area between the busbar and the cooling liquid. The present disclosure also relates to a battery system having such battery modules and to an electrical or hybrid-electrical vehicle having such a battery system.

## Description

The present disclosure relates to battery modules for a propulsion battery system of an electrical or hybrid-electrical vehicle, in particular to busbars having surfaces or a mesh of wires for contacting a cooling fluid. The present disclosure also relates to a battery system having such battery modules and to an electrical or hybrid-electrical vehicle having such a battery system.

In rechargeable batteries for electric vehicles, a number of individual battery cells are assembled to form a battery module, and several battery modules are electrically connected to form a battery pack. Propulsion battery systems of electric vehicles typically comprise one or a few battery packs.

A battery cell is the smallest electrical unit in a battery system to store electrical energy in a chemical manner. Battery cells typically comprise an anode, a cathode and an electrolyte. The anode and cathode are also referred to as terminals. Generally, battery cells should be operated within a certain temperature interval, e.g. 20°C to 60°C, for highest efficiency and longest lifetime. However, battery cells generate considerable heat when being quickly charged or quickly discharged, e.g. when much energy is required to accelerate the vehicle quickly. To keep the battery cells in their optimum temperature interval, this heat must be removed from the battery cells within short time. Fluid cooling is a preferred method of cooling battery cells, in which a cooling fluid (a cooling liquid or a cooling gas) contacts a portion of the outer surface of the battery cell, absorbs heat from this surface and heats up, moves to a cooling element, cools down and moves back to a battery cell to again absorb heat, and so on.

In single-phase cooling systems, the cooling fluid remains in its initial phase (gas or liquid) during the cooling cycle, whereas in two-phase cooling systems a liquid cooling fluid evaporates when absorbing heat and condenses back into the liquid state when cooling down. The present disclosure can be applied to both types of cooling systems. In a typical battery pack, a module has a shoebox-sized housing containing a plurality of flat trapezoid-shaped ("prismatic") battery cells that are stacked adjacent to each other. A compression mechanism presses them together to avoid excessive swelling.

The cooling fluid is in direct contact with at least a portion of the outer surface of each battery cell. The stack of battery cells ("cell stack") is immersed in the liquid or gaseous cooling fluid. The cell stack and the cooling fluid are contained in the housing which is delimited by walls, e.g. by a cover, a base, opposed side walls and opposed end plates. Depending on the cooling system, the housing can have an inlet, through which cooling fluid can enter the module, and an outlet through which the cooling fluid exits the module. In direct liquid cooling, battery modules may be immersed in a dielectric fluid (e.g., 3M's ™ Novec ™ Engineered Fluid), which cools the modules without causing an electrical short.

Typically, the battery cells in a battery pack are electrically and mechanically interconnected by so-called busbars. For example, busbars exhibit an elongated, flat shape and are made of an electrically conductive material. Such busbars are typically connected to the anode and/or cathode of the battery cells. Busbars may exhibit an integrated cooling system as described, for example, in US 2016/0190663 A1 (Bahrami et. al.). These busbars are hollow and comprise openings for coolant inlet and outlet. Further examples of hollow busbars are described in unpublished/pending patent application no. 62/794873 filed on 21 Jan 2019 by the same applicant. Battery packs with busbars having means for increasing the contact surface for a coolant are, for example, described in JP 2013-105674 A (Hitachi). The busbars have radiation fins to provide an increased contact surface. However, such radiation fins substantially add to the overall height of the busbar and make the busbars bulky in an undesired way.

The maximum temperature of a battery cell may occur at or close to the terminals of the battery cells, where the current densities are highest. Thus, a need exists to provide an improved cooling system for battery cells in order to remove excess heat from the battery cells. In particular, there exists a need to remove excess heat from the terminals and the busbars, respectively. Also, a need exists to keep the busbars at a flat, elongated shape in order to fit with the needs of vehicle manufacturers having to place battery packs in confined spaces.

In a first aspect, the present disclosure relates to a battery module for a propulsion battery system of an electrical or hybrid-electrical vehicle. The battery module comprises a plurality of battery cells. Each battery cell comprises an anode, a cathode, an electrolyte and electrical terminals. The battery module further comprises a busbar for electrically and mechanically connecting two terminals of two different battery cells of the plurality of battery cells with each other. The busbar comprises a terminal contact portion for connecting the busbar to one of the two terminals. The terminal contact portion comprises connection means for connecting the busbar to the terminal, and a major surface for contacting a cooling fluid. The major surface exhibits a plurality of recesses or a plurality of protrusions, to provide a larger contact area between the busbar and the cooling fluid. At least a part of one of the recesses or protrusions is arranged within the terminal contact portion.

The terminal contact portion is a portion of the busbar adapted (configured and arranged) to making electrical and mechanical contact to the electrical terminals of the battery cells. The terminal contact portion comprises connection means adapted to connecting the busbar to the electrical terminals of a battery cell. In one embodiment, the connection means comprises a contact surface. In other words, the electrical terminal contacts the surface of the busbar in the terminal contact portion. In another embodiment, the connection means comprises a hole for receiving an end portion of the electrical terminal of a battery cell. In other words, the electrical terminal of a battery cell protrudes through the hole and contact the circumference of the hole directly or indirectly.

Busbars according to the present disclosure may be made of metal. For example, a busbar may be cut from a metal web which is uncoiled from a supply roll and cut into separate elongated pieces of metal forming the busbar. Alternatively, for example, pieces of metal are cut from a larger metal block and rolled or milled to a flat elongated metal piece.

Preferably, the terminal contact portion is arranged at an end of the busbar. The terminal contact portion may extend from an edge of the busbar towards another edge of the busbar. Typically, the terminal contact portion extends over 40 % of the extension of the busbar, preferably 35 % of the extension of the busbar and most preferred over 30 % of the extension of the busbar.

In case of a hole, the terminal contact portion comprises the hole and the surrounding material of the busbar in an area, in which the hole is arranged, i. e. the diameter or cross-sectional extension of the hole and busbar material up to 50 % of the diameter or cross-sectional extension of the hole, preferably up to 25 % of the diameter or cross-sectional extension of the hole.

The recesses and/or protrusions on the major surface of the busbars increase the surface area of the busbars, compared to a flat major surface without recesses or protrusions. The larger surface area allows for a more effective heat transfer from the cooling fluid to the busbars. Such busbars are easy and cost-efficient to manufacture, provide an increase surface for heat transfer, particularly for parts carrying voltage and current like the busbars. Furthermore, the busbars according to the present disclosure do not add height to the battery module and are particularly suitable for confined spaces because of the compact design. In particular, busbars with recessed or protrusions arranged in the terminal contact portion are useful because of utilizing the whole or large parts of the busbar for cooling.

In a second aspect, the present disclosure relates to a battery module for a propulsion battery system of an electrical or hybrid-electrical vehicle. The battery module comprises a plurality of battery cells. Each battery cell comprises an anode, a cathode, an electrolyte and electrical terminals. The battery module further comprises a busbar for electrically and mechanically connecting two terminals of two different battery cells of the plurality of battery cells with each other. The busbar comprises a terminal contact portion for connecting the busbar to one of the two terminals. The terminal contact portion comprises connection means for connecting the busbar to the terminal, and a mesh of wires for contacting a cooling fluid. The mesh-like surface of the busbars increases the surface area of the busbars, compared to a flat even major surface without a mesh. The larger surface area allows for a more effective heat transfer from the cooling fluid to the busbars. Such busbars are easy and cost-efficient to manufacture, provide an increase surface for heat transfer, particularly for parts carrying voltage and current like the busbars. Furthermore, the busbars according to the present disclosure do not add height to the battery module and are particularly suitable for confined spaces because of the compact design. In particular, busbars with recessed or protrusions arranged in the terminal contact portion are useful because of utilizing the whole or large parts of the busbar for cooling. Also, a mesh-like surface avoids elements protruding from the surface. Furthermore, a mesh-like structure helps to reduce the weight of the busbar and the overall weight of the battery cells and the battery module. A mesh according to the present disclosure may be made by cutting pieces of the desired size and shape from larger mesh material. Alternatively, for example, meshs are made from individual wires which are braided or woven into a mesh. Preferably, junctions of wires are bonded to each other in order to provide higher mechanical stability. Moreover, typically a mesh is formed as a nonwoven or metal fabric by providing a mass of loose fibers with sufficient lubricating oil for them to be carded without disintegration of the fiber web.

In a third aspect, the present disclosure relates to a battery module for a propulsion battery system of an electrical or hybrid-electrical vehicle. The battery module comprises a plurality of battery cells. Each battery cell comprises an anode, a cathode, an electrolyte and electrical terminals. The battery module further comprises a busbar for electrically and mechanically connecting two terminals of two different battery cells of the plurality of battery cells with each other. The busbar comprises a terminal contact portion for connecting the busbar to one of the two terminals. The terminal contact portion comprises connection means for connecting the busbar to the terminal, and at least two channels extending from a surface of the busbar into the busbar, thereby forming a passageway for a cooling fluid. The busbars with channels increase the contact surface area of the busbars to the cooling fluid, compared to a busbar without channels. The larger surface area allows for a more effective heat transfer from the cooling fluid to the busbars. Such busbars are easy and cost-efficient to manufacture, provide an increase surface for heat transfer, particularly for parts carrying voltage and current like the busbars. Furthermore, the busbars according to the present disclosure do not add height to the battery module and is particularly suitable for confined spaces because of the compact design. In particular, busbars with channels arranged in the terminal contact portion are useful because of utilizing the whole or large parts of the busbar for cooling. Such busbars avoid elements protruding from the surface and, in particular, provides for an even surface, while still having an increased surface available for heat transfer.

Generally, in the context of this disclosure, recesses extending from one surface of the busbar into the busbar are considered channel if the length of the recess extending into the busbars is larger than the cross-sectional extension of the recess. In other words, if the length of the recess is larger than its diameter or edge length, the recess forms a channel in this context. The channel may extend to through the entirety of the busbar, thereby forming a complete passageway through the busbar. Alternative, the channel may extend from one surface of the busbar, but end within the busbar.

In certain embodiments, the cross-section of the channels may be fixed over the length of the channels. In certain other embodiments, the cross-section of the channels may vary over the length of the channels.

In certain embodiments, the channels may be parallel to each other. In certain other embodiments, the channels may not be parallel to each other.

In certain embodiments, the channels may be spaced equidistantly relative to each other. In certain other embodiments, the channels may be spaced with different spacings between the channels.

In a fourth aspect, the present disclosure relates to a battery system comprising a battery module according to the present disclosure.

In a fifth aspect, the present disclosure relates to an electrical or hybrid-electrical vehicle comprising a battery system according to the present disclosure.

In some embodiments of the first aspect, the major surface of the busbar exhibits a plurality of protrusions integrally formed with the busbar. Such busbars are easy and cost-efficient to manufacture, for example with surface-finishing measures or molding of the surface.

In some embodiments of the first, second or third aspect, the busbar has an elongated shape defining a rectangular cross-section, the cross-section having a width and a height, wherein the height-to-width aspect ratio of the cross-section is between 1:20 and 1:5. Such busbars provide a compact design, particularly useful in confined spaces. In some embodiments of the first aspect, the major surface exhibits a plurality of recesses, wherein at least one of the recesses is formed as a groove. A groove defined by the shape of the major surface is an element that recesses from the major surface. Where the major surface is shaped to define a plurality of grooves, a ridge may be present in the space between two adjacent grooves. A groove may have a certain length. Generally, in the context of this disclosure, a recess in the major surface is considered a groove if its length is larger than its width. Such busbars are easy and cost-efficient to manufacture, for example with surface-finishing measures or molding of the surface.

In certain embodiments the grooves are parallel to each other. In certain embodiments the ridges are parallel to each other. In certain embodiments the grooves or the ridges are parallel to each other.

The grooves and the spaces between adjacent ridges can have different shapes, i.e. different cross sections, such as for example a rectangular, a triangular, a semi-elliptical or a semi-circular cross section.

In certain embodiments, the cross-section of the grooves may be fixed over the length of the channels. In certain other embodiments, the cross-section of the grooves may vary over the length of the channels.

In certain embodiments, the grooves may be parallel to each other. In certain other embodiments, the grooves may not be parallel to each other.

In certain embodiments, the grooves may be spaced equidistantly relative to each other. In certain other embodiments, the grooves may be spaced with different spacings between the grooves.

In some embodiments of the first aspect, the major surface exhibits a plurality of protrusions, wherein at least one of the protrusions is formed as a ridge. The inner surface may be shaped to define a plurality of ridges. A ridge, in the context of this disclosure, is an element that protrudes from the major surface. The ridges on the major surface may have many different shapes and cross sections. A ridge may have, for example, a semi-circular or a U-shaped cross section, a triangular or a V-shaped cross section, a rectangular cross section or an elliptical cross section. Not all ridges may have the same cross section, so that, for example, a first ridge of the plurality of ridges has a semi-circular cross section, and a second ridge of the plurality of ridges has a rectangular cross section.

A ridge may have a fixed cross section over its length. Alternatively, a ridge may have a variable cross section over its length, in other words, its cross section may vary in width (in directions parallel to the inner surface), or depth (in directions orthogonal to the major surface), shape or size between a first position in length direction of the ridge and a second position in its length direction.

Such busbars are easy and cost-efficient to manufacture, for example with molding of the surface.

The ridges and the spaces between adjacent ridges can have different shapes ,i.e. different cross sections, such as for example a rectangular, a triangular, a semi-elliptical or a semi-circular cross section.

In certain embodiments, the cross-section of the ridges may be fixed over the length of the channels. In certain other embodiments, the cross-section of the ridges may vary over the length of the channels.

In certain embodiments, the ridges may be parallel to each other. In certain other embodiments, the ridges may not be parallel to each other.

In certain embodiments, the ridges may be spaced equidistantly relative to each other. In certain other embodiments, the ridges may be spaced with different spacings between the ridges.

In some embodiments of the second aspect, at least a part of the mesh of wires is arranged within the terminal contact portion. Such busbars with a mesh of wires arranged within the terminal contact portion are useful because of utilizing the whole or large parts of the busbar for cooling. Such busbars avoid elements protruding orthogonally from the surface while still having an increased surface available for heat transfer.

In some embodiments of the second aspect, the busbar is entirely formed as a mesh of wires. Such busbars being entirely formed as a mesh of wires even further increase the surface and thereby further enhance the heat transfer.

In certain embodiments, the wires may be arranged regularly, i. e. with an equidistant spacing relative to each other. In certain other embodiments, the wires may not be spaced equidistant relative to each other, i. e. with varying spacing of the wires relative to each other.

In certain embodiments, all of the wires may have the same diameter. In certain other embodiments, the wires may differ in diameter.

In some embodiment of the third aspect, at least one of the channels is at least partially arranged within the terminal contact portion. Such busbars with channels arranged within the terminal contact portion are useful because of utilizing the whole or large parts of the busbar for cooling. Such busbars avoid elements protruding from the surface and provide for an even surface, while still having an increased surface available for heat transfer.

In some embodiments of the third aspect, the busbar comprises two major surfaces and wherein at least one of the channels extends from one major surface to another major surface of the busbar. Such busbars are easy and cost-efficient to manufacture, because such channels can easily be made for example by drilling or molding. Also, such busbars help to provide channels for the coolant with good fluidic properties, thus allowing for efficient cooling.

In some embodiments of the third aspect, at least one of the channels exhibits a cross-section of rectangular shape, circular or semi-circular shape, triangular shape, elliptical or semi-elliptical shape or w-shape. Such busbars are easy and cost-efficient to manufacture. In particular, a w-shaped channel further increase the surface of the channel and thus provide a larger contact surface for a coolant.

In some embodiments of the first, second or third aspect, the battery module contains a cooling fluid comprising a dielectric liquid. Such battery modules with a dielectric liquid allow for an immersion cooling and direct contact between the coolant and the battery parts. Electrical shorts are avoided even when the coolant contacts parts of the battery carrying voltage and current, for example the terminals and the busbars, respectively. The dielectric liquid may be an inert dielectric liquid.

It is apparent to those skilled in the art that combinations of the above-mentioned embodiments are conceivable. For example, a busbar with a major surface comprising recesses or protrusions may also comprise further major surface having a mesh of wires thereon. Also, a busbar with a major surface comprising recesses or protrusion may also comprise at least two channels extending from the surface of the busbar into the busbar and thereby forming a passageway for a cooling fluid. Furthermore, a busbar comprising at least two channels extending from the surface of the busbar into the busbar and thereby forming a passageway for a cooling fluid may further comprise recesses or protrusions on the surface of the channels. Also, the surface of the channels may comprise a mesh of wires arranged thereon.

The disclosure will now be described in more detail with reference to the following Figures exemplifying different embodiments:
- Fig. 1: is a schematic perspective view of a battery system having a battery module according to the present disclosure.
- Fig. 2a: is a schematic side view of a busbar connecting two battery modules according to one embodiment of the present disclosure.
- Fig. 2b: is a schematic side view of a busbar connecting two battery modules according to another embodiment of the present disclosure.
- Fig. 3a: is a cross-sectional side view of a busbar according to one embodiment of the present disclosure.
- Fig. 3b: is a perspective view of a busbar according to the embodiment of Fig. 3a.
- Fig. 4a: is a cross-sectional side view of a busbar according to another embodiment of the present disclosure.

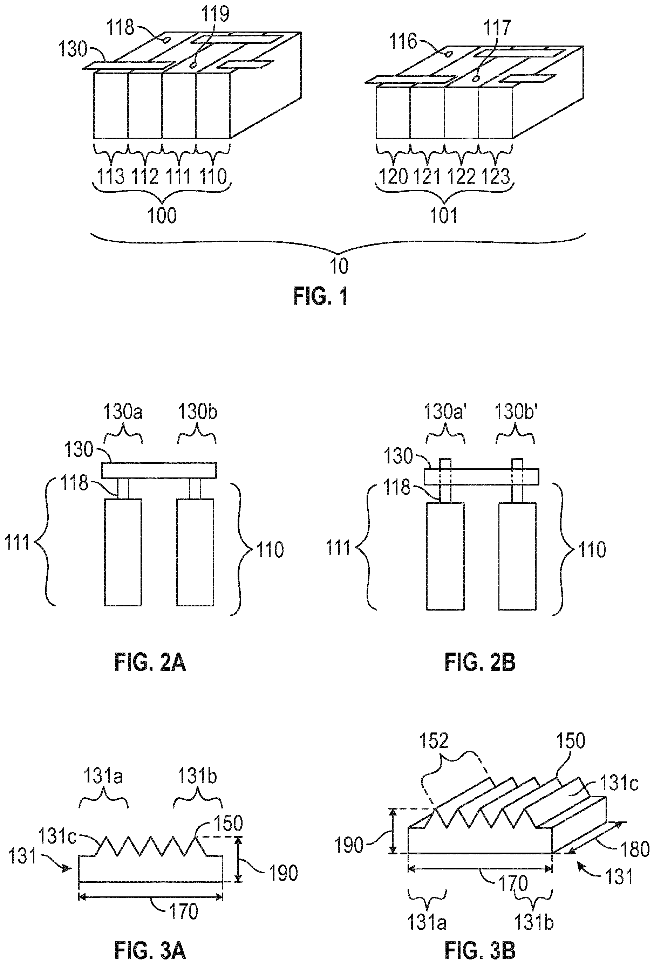

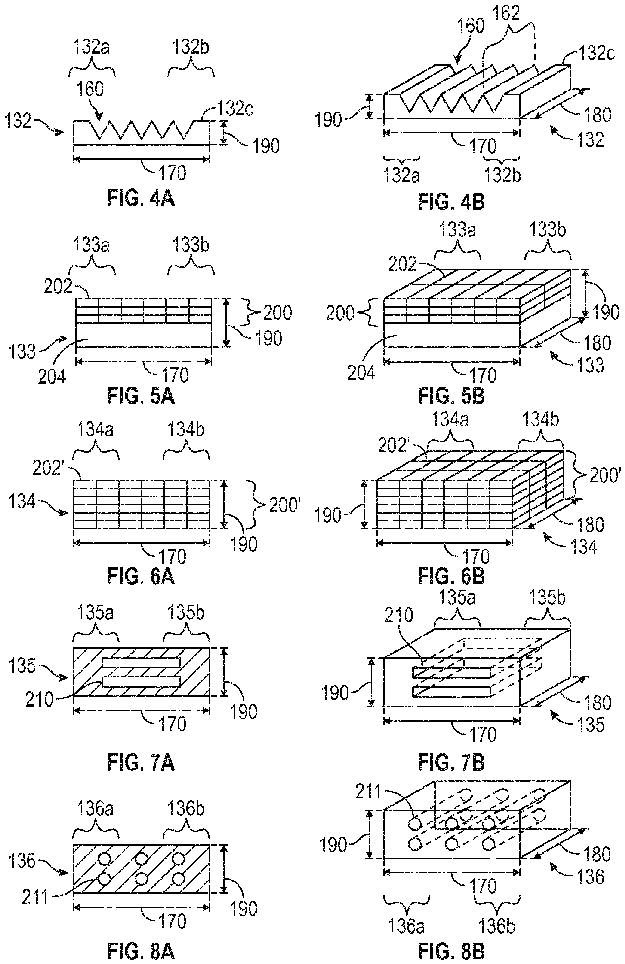

- Fig. 3b: is a perspective view of a busbar according to the embodiment of Fig. 4a.
- Fig. 5a: is a cross-sectional side view of a busbar according to yet another embodiment of the present disclosure.
- Fig. 5b: is a perspective view of a busbar according to the embodiment of Fig. 5a.
- Fig. 6a: is a cross-sectional side view of a busbar according to still another embodiment of the present disclosure.
- Fig. 6b: is a perspective view of a busbar according to the embodiment of Fig. 6a.
- Fig. 7a: is a cross-sectional side view of a busbar according to a further embodiment of the present disclosure.
- Fig. 7b: is a perspective view of a busbar according to the embodiment of Fig. 7a.
- Fig. 8a: is a cross-sectional side view of a busbar according to yet a further embodiment of the present disclosure.
- Fig. 8b: is a perspective view of a busbar according to the embodiment of Fig. 8a.

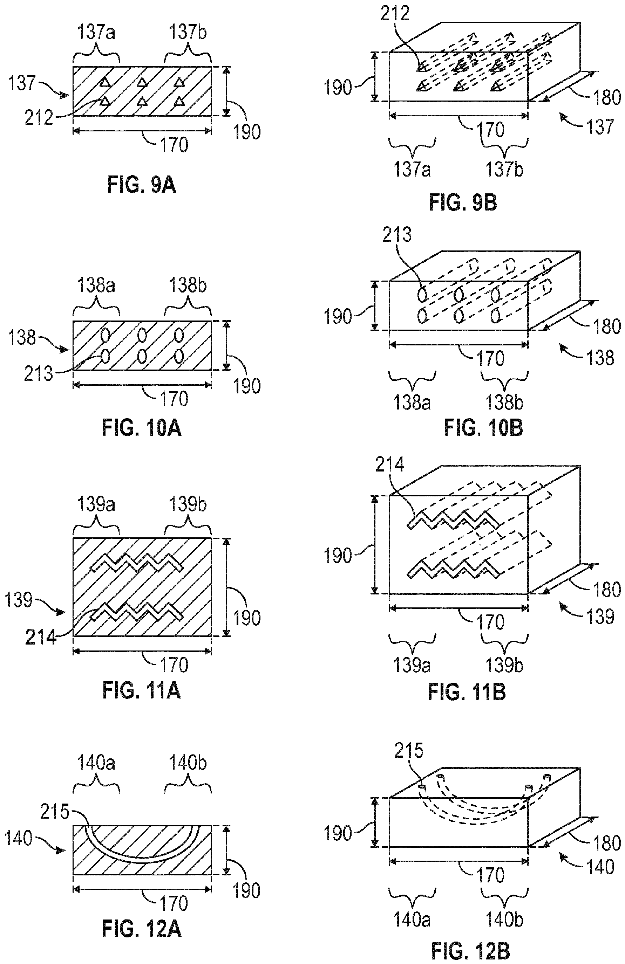

- Fig. 9a: is a cross-sectional side view of a busbar according to another embodiment of the present disclosure.
- Fig. 9b: is a perspective view of a busbar according to the embodiment of Fig. 9a.
- Fig. 10a: is a cross-sectional side view of a busbar according to one embodiment of the present disclosure.
- Fig. 10b: is a perspective view of a busbar according to the embodiment of Fig. 10a.
- Fig. 11: a is a cross-sectional side view of a busbar according to one embodiment of the present disclosure.
- Fig. 11b: is a perspective view of a busbar according to the embodiment of Fig. 11a.
- Fig. 12a: is a cross-sectional side view of a busbar according to one embodiment of the present disclosure.
- Fig. 12b: is a perspective view of a busbar according to the embodiment of Fig. 12a.

FIG. 1 shows in a schematic perspective view a battery system 10 having two battery modules 100, 101 according to one aspect of the present disclosure. Battery module 100 comprises several battery cells 110, 111, 112, 113 and battery module 101 comprises several battery cells 120, 121, 122, 123. Each of the battery modules 100, 101 comprise several busbars 130. Furthermore, each of the battery cells 110, 111, 112, 113 or 120, 121, 122, 123 comprise two electrical terminals 116, 117, 118, 119, to which the busbars 130 are mechanically and electrically connected. Some of the electrical terminals 116, 117, 118, 119 are not visible in FIG. 1 as these are located underneath of the busbars 130.

As can be seen in FIG. 1, the busbars 130 are of elongated shape and connect the electrical terminals 116, 117, 118, 119 of two or more battery cells 110, 111, 112, 113 or battery cells 120, 121, 122, 123 with each other. As FIG. 1 only provides a schematic view of the battery system 10 with the busbars 130. Details of the busbars 130 are not visible in FIG. 1 (please see FIGs. 3a/b to 12a/b for details of the busbars 130).

The busbars 130 in FIG. 1 connect electrical terminals 116, 117, 118, 119 of different battery cells 110, 111, 112, 113, 120, 121, 122, 123 of one battery module 100, 101 with each other. Some of the busbars 130 connect electrical terminals 116, 117, 118, 119 of one or more of the battery cells 110, 111, 112, 113, 120, 121, 122, 123 of that battery module 100, 101 with other parts of the battery system 10, for example parts of a different battery module 100, 101 or other parts belonging to the propulsion system of an electrical or hybrid-electrical vehicle (not shown in FIG. 1).

FIGs. 2a and 2b illustrate in a side view the battery cells 110, 111 and the respective electrical terminals 118 being connected by the terminal contact portion 132a of the busbar 130. Two terminal contact portions 132a, 132b are shown with the busbar 130 according to the present disclosure in FIGs. 2a and 2b, wherein each of the terminal contact portion in this embodiment is arranged at one end portion of the busbar 130. In different embodiments, terminal contact portions 130a, 130b may be arranged at different portions of the busbar 130, for example in the middle portion (not shown here).

FIG. 2a shows the connection between the electrical terminals 118 and the terminal contact portion 130a, 130b of the busbar 130 such that the busbar 130 is arranged on top of the and thereby contacting the electrical terminals 118. In contrast thereto, FIG. 2b show the connection between the terminal contact portion 130a', 130b' and the electrical terminals 118 such that the electrical terminals 118 protrude through holes (not visible in FIG. 2b) of the terminal contact portions 132 of the busbars 130. The holes may include holes or threaded portions (not visible in FIG. 2b), through which bolted or threaded portions (not visible in FIG. 2b) of the electrical terminals 118 may protrude to provide a reliable mechanical and electrical connection between the terminals 118 of the battery cells 110, 111 and the terminal contact portions 130a, 130b of the busbar 130.

Additional means for connecting the electrical terminals 118 and the terminal contact portions 132 of busbars 130 with each other may be provided, for example an electrically conductive adhesive, solder or a welded portion. As FIGs 2a and 2b only provide a schematic view of the battery cells 110, 111 and the busbars 130. Details of the busbars 130 are not visible in FIG. 2a and 2b, these will be described in the context of FIGs. 3a/b to 12a/b.

FIG. 3a shows in a schematic side view the busbar 131 according to some embodiments of the first aspect of the present disclosure. The busbar 131 comprises protrusions 150 arranged on the major surface 134 of the busbar 131. The protrusions 150 exhibit a triangular cross-sectional shape protruding from the major surface 131c of the busbar 131 over a height in direction 190 of busbar 131. Other shapes are conceivable, for example semi-circular, semi-elliptical, rectangular, trapezoidal or rhomboidal (not shown).

FIG. 3b shows in a perspective side view the protrusions 150 on the major surface 131c of the busbar 131 as shown in FIG. 3a. In the embodiment shown here, the protrusions 150 extend over the whole width extension in direction 180 of the busbar 131, thereby forming ridges 152. The ridges 152 shown here are continuous. Ridges 152 are substantially provided over entire length extension in direction 170 of busbar 131, i. e. extending into the terminal contact portions 131a and 131a.

As mentioned above, the protrusions 150 exhibit a triangular cross-sectional shape, although other shapes are conceivable, for example semi-circular, semi-elliptical, rectangular, trapezoidal or rhomboidal.

As shown, protrusions 150 and ridges 152, respectively, are equidistantly spaced in a length direction 170 of the busbar 131.

In FIGs. 3a and 3b, the cross-section of each of the protrusions 150 and ridges 152, respectively, are the same.

In a different embodiment (not shown in FIG. 3b), the protrusions 150 may not extend over the whole width extension in direction 180 of the busbar 131, i. e. the ridges 152 may be discontinuous in the width extension in direction 180 of busbar 131. Also, more than one ridge 152 may be arranged side-by-side over the width in direction 180 of the busbar 131, such that one ridge with interruptions in the longitudinal extension of the ridge (i., e. the width extension in direction 180 of the busbar 131) may be formed (not shown).

FIG. 4a shows in a schematic side view the busbar 132 according to the first aspect of the present disclosure. The busbar 132 comprises recesses 160 arranged on the major surface 132c of the busbar 130. The recesses 160 exhibit a triangular cross-sectional shape extending from the major surface 132c into the busbar 130 over a height in direction 190 of the busbar 132. Other shapes of the recesses 160 are conceivable, for example semi-circular, semi-elliptical, rectangular, trapezoidal or rhomboidal.

FIG. 4b shows in a perspective side view the recesses 160 on the major surface 132c of the busbar 132 as shown in FIG. 4a. The recesses 160 extend over the whole width extension in direction 180 of the busbar 132, thereby forming grooves 162. As mentioned above, the recesses 160 exhibit a triangular cross-sectional shape. Other shapes are conceivable, for example semi-circular, semi- elliptical, rectangular, trapezoidal or rhomboidal (not shown).

As shown, recesses 160 and grooves 162, respectively, are equidistantly spaced over a length in direction 170 of the busbar 132.

In FIGs. 4a and 4b, the cross-section of each of the recesses 160 and grooves 162, respectively, are the same.

In the embodiment shown here, the recesses 160 extend over the whole width extension in direction 180 of the busbar 130. The grooves 162 shown here are continuous. Grooves 162 are substantially provided over the entire length extension in direction 170 of the busbar 132, i. e. extending into the terminal contact portions 132a and 132b. In a different embodiment (not shown in FIG. 4b), the recesses 160 may not extend over the whole width extension in direction 180 of the busbar 132, i. e. the grooves 162 may be discontinuous in the width extension in direction 180 of the busbar 132. Also, more than one groove 162 may be arranged side-by-side in the width direction 180 of the busbar 132, such that one groove with interruptions in the longitudinal extension (i., e. the width extension in direction 180 of the busbar 132) of the groove may be formed (not shown).

FIG. 5a shows in a cross-sectional side view a busbar 133 according to the second aspect of the present disclosure. The busbar 133 comprises a mesh 200 of wires 202. The mesh 200 is formed by wires 202 comprising junctions of wires 202. The wires 202 may be connected at the junction by means of solder, adhesive or mechanically, for example by weaving. The mesh 200 of wires 202 comprises a plurality of interstices formed between the wires 202 to allow a partial or entire penetration of the mesh 200 of wires 202 by a cooling fluid used with the battery system 10 (not shown here) thereby providing an increased contact surface to a cooling fluid. Busbar 133 further comprises a solid portion 204 underneath of the mesh 202. In other words, the mesh 200 only extends in part over the height in direction 190 of the busbar 133 and the solid portion 204 only extends in part over the height in direction 190 of the busbar 133. The mesh 200 of wires 202 is attached to the solid portion 204 by attachment means (not shown), for example adhesive, solder or mechanical attachment means like hooks such that the mesh 200 is in close thermal contact with the solid portion 204 and cannot easily be removed therefrom. The solid portion 204 may help to provide sufficient mechanical stability of the busbar 133. Also, the solid portion 204 may provide for a higher ampacity of the busbar 133, because a solid portion provides for a larger cross-section available for conducting current compared to a mesh of wires having the same overall dimensions as the solid portion.

FIG. 5b shows in a perspective side view the busbar 133 of FIG. 5a comprising the mesh 200 of wires 202 and the solid portion 204 underneath of the mesh 200. In the embodiment shown in FIG. 5b, the mesh 200 of wires 202 extends over the whole area of the busbar 133, i. e. the mesh 200 and the solid portion 204 have a congruent extension. As can be seen, the mesh 200 extends into the terminal contact portions 133a and 133b.

In a different embodiment (not shown in FIG. 5b), the mesh 200 of wires 202 extends only partially over the width in direction 180 (or over the length in direction 170) of the busbar 133, such that the solid portion 204 may extend beyond the mesh 200 in one or more of the directions 170, 180 of the mesh 200. Furthermore, in another embodiment, the mesh 200 may have a larger areal extension than the solid portion 204, such that the mesh 200 extends beyond the solid portion 204 in one or more directions 170, 180 of the solid portion 204.

FIG. 6a shows in a cross-sectional side view the busbar 134 with the mesh 200' of wires 202' according to a different embodiment of the second aspect of the present disclosure compared to FIGs. 5a and 5b. Different to FIGs. 5a and 5b, there is no solid portion underneath of the mesh 200' such that the busbar 134 is entirely formed over the entire height in direction 190 of the busbar 134 by the mesh 200' of wires 202'. As can be seen, the mesh 200 extends into the terminal contact portions 134a and 134b. In this case, the mesh 200' of wires 202' needs to be configured and arranged such that a sufficient mechanical stability as well as a sufficient ampacity is given. For example, the wires 202' need to be of a sufficient diameter, the number of wires 202' per area or volume unit needs to be sufficiently high, and/or a material sufficient to provide the required mechanical stability and ampacity needs to be selected.

FIG. 6b shows in a perspective side view the busbar 134 of FIG: 6a comprising the mesh 200' of wires 202', whereby - different to the busbar 134 of FIG. 5b - the busbar 134 here is entirely formed over the entire height in direction 190 of the busbar 134 by the mesh 200' of wires 202'.

In FIG. 5a/b and 6a/b, the wires 202, 202' may be made of a conductive material. In a different embodiment, the wires 202, 202' may be comprise a non-conductive material and may be rendered conductive by further comprising a conductive material thereon and/or therein (not shown in the FIGs). FIG. 7a shows in a cross-sectional side view the busbar 135 according to some embodiments of the third aspect of the present disclosure. The busbar 135 comprises two channels 210 formed within the busbar 135. In the embodiment shown, the channels 210 exhibit a rectangular cross-section extending with their cross-section over the length of the busbar 135 in direction 170 and into the terminal contact portions 135a and 135b.

FIG. 7b shows in a perspective side view the busbar 135 as shown in FIG. 7a. As can be seen, the channels 210 extend from one surface of the busbar 135 through the entire extension of the busbar 135 to a different surface of the busbar 135. Complete passageways for a cooling fluid (not shown) through the busbar 135 are formed thereby. As shown, channels 210 are equidistantly spaced and parallel to each other. As shown, the channels 210 are provide over the height in direction 190 of the busbar 134. Alternatively, the channels 210 may be provided side-by-side over the length in direction 170 or over the width in direction 180 of the busbar 135 (different arrangement of channels 210 not shown here).

In FIGs. 7a and 7b, the cross-section of each of the channels 210 are the same.

In the embodiment shown, the channels 210 extend from one surface to a different surface of the busbar 130. In a different embodiment (not shown in FIG. 7b), the channels 210 may only partially extend through the busbar 135 such that the channels 210 extend from one surface of the busbar 135 and end within the busbar 135, i. e. without extending to a different surface of the busbar 135. The two channels 210 shown in FIG. 7b are parallel to each other. In a different embodiment (not shown in FIG. 7b), the channels 210 may not be parallel to each other.

FIGs. 8a and 8b show a different embodiment of the busbar 136 according to some other embodiments of the third aspect of the present disclosure compared to FIGs. 7a and 7b, wherein FIG. 8a is a cross-sectional side view and FIG. 8b is a perspective view. The channels 211 exhibit a round cross-section instead of a rectangular cross-section as shown in FIGs. 7a and 7b. The busbar 136 comprises a plurality of channels 210'. Similar to the embodiment of FIGs. 7a and 7b, the channels 211 extend from one surface of the busbar 136 to another surface of the busbar 136 entirely through the busbar 136. Complete passageways for a cooling fluid (not shown) through the entire busbar 136 are formed thereby. As shown, channels 211 are equidistantly spaced and are provided over the length in direction 170 of the busbar 136 and extending into the terminal contact portions 136a and 136b. In FIGs. 8a and 8b, the cross-section of each of the channels 211 are the same. In a different embodiment compared to FIGs. 8a and 8b, the channels 211 may not extend entirely through the busbar 136 such that the channels 211 extend from one surface of the busbar 136 and end within the busbar 136. Similar to FIG. 7b, the channels 211 in FIG. 8b are parallel to each other. As shown, the channels 211 are provide over the height in direction 190 of the busbar 136 in parallel with each other as well as side-by-side over the length in direction 170 or over the width in direction 180 of the busbar 136 (different arrangement of channels 211 not shown here). In a different embodiment (not shown in FIG. 8b), the channels 211 may not be parallel to each other.

FIGs. 9a and 9b show a different embodiment of the busbar 137 according to some other embodiments of the third aspect of the present disclosure compared to FIGs. 8a and 8b, wherein FIG. 9a is a cross-sectional side view and FIG. 9b is a perspective view. The channels 212 exhibit a triangular cross-section instead of a round cross-section as shown in FIGs. 8a and 8b. Similarly, the busbar 137 comprises a plurality of channels 212. Similar to the embodiment of FIGs. 8a and 8b, the channels 212 extend from one surface of the busbar 137 entirely through the busbar 137 to another surface of the busbar 137. Complete passageways for a cooling fluid (not shown) through the entire busbar 137 are formed thereby. As shown, channels 212 are equidistantly spaced and are provided over the length in direction 170 of the busbar 137 and extending into the terminal contact portions 137a and 137b. In FIGs. 9a and 9b, the cross-section of each of the channels 212 are the same. In a different embodiment (not shown in FIGs. 9a and 9b), the channels 212 may not extend entirely through the busbar 137 such that the channels 212 extend from one surface of the busbar 137 and end within the busbar 137. Similar to FIG. 8b, the channels 212 in FIG. 9b are parallel to each other. As shown, the channels 212 are provided over the height in direction 190 of the busbar 137 in parallel with each other as well as side-by-side over the length in direction 170 or over the width in direction 180 of the busbar 137 (different arrangement of channels 212 not shown here). In a different embodiment (not shown in FIG. 9b), the channels 212 may not be parallel to each other.

FIGs. 10a and 10b show a different embodiment of the busbar 138 according to some other embodiments of the third aspect of the present disclosure compared to FIGs. 8a and 8b, wherein FIG: 10a is a cross-sectional side view and FIG. 10b is a perspective view of the busbars 138 as shown in FIG. 10a. The channels 213 exhibit an elliptical cross-section instead of a round cross-section as shown in FIGs. 8a and 8b. Similarly, the busbar 138 comprises a plurality of channels 213. Similar to the embodiment of FIGs. 8a and 8b, the channels 213 extend from one surface of the busbar 138 entirely through the busbar 138 to another surface of the busbar 138. Complete passageways for a cooling fluid (not shown) through the entire busbar 138 are formed thereby. As shown, channels 213 are equidistantly spaced and are provided over the length in direction 170 of the busbar 138 and extending into the terminal contact portions 138a and 138b.

In FIGs. 10a and 10b, the cross-section of each of the channels 213 are the same.

In a different embodiment (not shown in FIGs. 10a and 10b), the channels 213 may not extend entirely through the busbar 138 such that the channels 213 extend from one surface of the busbar 138 and end within the busbar 138. Similar to FIG. 8b, the channels 213 in FIG. 10b are parallel to each other. As shown, the channels 213 are provide over the height in direction 190 of the busbar 138 in parallel with each other as well as side-by-side over the length in direction 170 or over the width in direction 180 of the busbar 138 (different arrangement of channels 213 not shown here). In a different embodiment (not shown in FIG. 10b), the channels 213 may not be parallel to each other.

FIGs. 11a and 11b (like 7a/b) show a different embodiment of the busbar 139 according to some other embodiments of the third aspect of the present disclosure compared to FIGs. 7a and 7b, wherein FIG. 11a is a cross-sectional side view and FIG. 11b is a perspective view of the busbar 139 as shown in FIG. 11a. The channels 214 exhibit an w-shaped cross-section instead of a rectangular cross-section as shown in FIGs. a and 7b. The channels 214 extend with their cross-section over the length in direction 170 of the busbar 135 and into the terminal contact portions 139a and 139b.

Similar to the embodiment of FIGs. 7a and 7b, the channels 214 extend from one surface of the busbar 139 entirely through the busbar 139 to another surface of the busbar 139. Complete passageways for a cooling fluid (not shown) through the entire busbar 139 are formed thereby. In a different embodiment (not shown in FIGs. 11a and 11b), the channels 214 may not extend entirely through the busbar 130 such that the channels 214 extend from one surface of the busbar 139 and end within the busbar 139. Similar to FIG. 7b, the channels 214 in FIG. 11b are parallel to each other. Alternatively, the channels 214 may be provided side-by-side over the length in direction 170 or over the width in direction 180 of the busbar 139 (different arrangement of channels 214 not shown here). In a different embodiment (not shown in FIG. 11b), the channels 214 may not be parallel to each other.

FIGs. 12a and 12b show a different embodiment of the busbar 140 according to some other embodiments of the third aspect the present disclosure compared to FIGs. 7a/b to 11a/b, wherein FIG. 12a is a cross-sectional side view and FIG. 12b is a perspective view of the busbar 140 as shown in FIG. 12a. The channels 215 extend from one surface of the busbar 140 into the busbar 140 back to the same surface of the busbar 140. Similar to the busbars shown in FIGs. 7a/b to 11a/b, the busbar 140 comprises at least two channels 215. In FIG. 12a, only one channel 215 can be seen, whereas in FIG. 12b, two channels 215 are shown. Channels 215 extend with their cross-section over the length in direction 170 of the busbar 140 and into the terminal contact portions 140a and 140b.Thus, channels 215 form passageways for a cooling fluid (not shown) through the busbar 140 in a different way compared to FIGs. 7a/b to 11a/b. In the embodiment of FIGs. 12a and 12b, the channels 215 are parallel to each other and each extend within a plane seen over the width in direction 180 of the busbar 140. In a different embodiment (not shown in FIG. 12b), the channels 215 may not be parallel to each other and/or may not each extend within a plane seen over the width in direction 180 of the busbar 140, but over the width in direction 180 to some extent (not shown here).

Immersion cooling of the battery cells in the battery module may be best achieved with a cooling fluid that is liquid at ambient conditions, i.e. at 20 °C and at atmospheric pressure of 1013 hectopascal (hPa). In operation, i.e. when heated, the cooling fluid may remain liquid in the entire operational temperature range of the battery module. It may, for example, remain liquid in the temperature range of between 20°C and 60°C at a pressure 1013 hPa. Such cooling fluids may be usable in single-phase immersion cooling systems. Hence in a battery module according to the present disclosure the cooling volume may contain a cooling fluid which is liquid at 20°C and at 1013 hPa. Alternatively, the cooling fluid may evaporate in operation, i.e. when heated, and be gaseous at the upper end of the operational temperature range. It may, for example, be liquid at 20 °C and at 1013 hPa, and be gaseous at 60°C and 1013 hPa. Such cooling fluids may be usable in two-phase cooling systems.

Suitable cooling fluids may comprise, or consist essentially of, halogenated compounds, oils (e.g., mineral oils, synthetic oils, or silicone oils), or combinations thereof. In some embodiments, the halogenated compounds may include fluorinated compounds, chlorinated compounds, brominated compounds, or combinations thereof. In some embodiments, the halogenated compounds may include or consist essentially of fluorinated compounds.

In some embodiments, the cooling fluid has an electrical conductivity at 25 °C of less than about 10-5 S/cm (Siemens per centimetre), less than about 10-6 S/cm, less than 10-7 S/cm, or less than about 10-10 S/cm.

In some embodiments, the cooling fluid may have a dielectric constant that is less than about 25, less than about 15, or less than about 10, as measured in accordance with ASTM D150 at room temperature.

In some embodiments, the cooling fluid has a melting point of less than -40 °C and a boiling point of greater than 80°C for single phase cooling. In some embodiments, the cooling fluid has a thermal conductivity of 0.05 W/m-K (Watt per meter and Kelvin) or higher. In some embodiments, the cooling fluid has a specific heat capacity of 800 J/kg-K (Joule per kilogramm and Kelvin) or more. In some embodiments, the cooling fluid has a viscosity of 2 cSt (centistokes) or lower at 20°C. In some embodiments, the cooling fluid is non-flammable (e.g., has no closed cup flashpoint) or has low flammability (e.g., a flash point of greater than 37 °C).

In some embodiments, fluorinated compounds having such properties may comprise, or consist of, any one, or a combination, of fluoroethers, fluorocarbons, fluoroketones, fluorosulfones, and fluoroolefins. In some embodiments fluorinated compounds having such properties may comprise, or consist of, partially fluorinated compounds, perfluorinated compounds, or a combination thereof.

As used herein, "fluoro-" (for example, in reference to a group or moiety, such as in the case of "fluoroalkylene" or "fluoroalkyl" or "fluorocarbon") or "fluorinated" means (i) partially fluorinated such that there is at least one carbon-bonded hydrogen atom, or (ii) perfluorinated.

As used herein, "perfluoro-" (for example, in reference to a group or moiety, such as in the case of "perfluoroalkylene" or "perfluoroalkyl" or "perfluorocarbon") or "perfluorinated" means completely fluorinated such that, except as may be otherwise indicated, there are no carbon-bonded hydrogen atoms replaceable with fluorine.

Descriptions for elements in figures should be understood to apply equally to corresponding elements in other figures, unless indicated otherwise. Although specific embodiments have been illustrated and described herein, it will be appreciated by those of ordinary skill in the art that a variety of alternate and/or equivalent implementations can be substituted for the specific embodiments shown and described without departing from the scope of the present disclosure. This application is intended to cover any adaptations or variations of the specific embodiments discussed herein. Therefore, it is intended that this disclosure be limited only by the claims and the equivalents thereof.

### Embodiments

1. A battery module for a propulsion battery system of an electrical vehicle, comprising
   a. a plurality of battery cells, each battery cell comprising an anode, a cathode, an electrolyte and electrical terminals,
   b. a busbar for electrically and mechanically connecting two terminals of two different battery cells of the plurality of battery cells with each other, the busbar comprising
      i. a terminal contact portion for connecting the busbar to one of the two terminals, the terminal contact portion comprising connection means for connecting the busbar to the terminal, and
      ii. a major surface for contacting a cooling fluid, wherein the major surface exhibits a plurality of recesses or a plurality of protrusions, to provide a larger contact area between the busbar and the cooling fluid,
   wherein at least a part of one of the recesses or protrusions is arranged within the terminal contact portion.
2. The battery module according to embodiment 1, wherein the busbar comprises two major surfaces and wherein the recesses or protrusions are arranged on both opposite major surfaces.
3. The battery module according to any one of embodiments 1 or 2, wherein the major surface exhibits a plurality of protrusions and wherein the protrusions integrally formed with the busbar.
4. The battery module according to any one of embodiments 1 to 3, wherein the major surface exhibits a plurality of recesses, wherein at least one of the recesses is formed as a groove.
5. The battery module according to any one of embodiments 1 to 4, wherein the major surface exhibits a plurality of protrusions, wherein at least one of the protrusions is formed as a ridge.
6. A battery module for a propulsion battery system of an electrical vehicle, comprising
   a. a plurality of battery cells, each battery cell comprising an anode, a cathode, an electrolyte and electrical terminals, and
   b. a busbar for electrically and mechanically connecting two terminals of two different battery cells of the plurality of battery cells with each other, the busbar comprising
      i. a terminal contact portion for connecting the busbar to one of the two terminals, the terminal contact portion comprising connection means for connecting the busbar to the terminal, and
      ii. a mesh of wires for contacting a cooling fluid.
7. The battery module according to embodiment 6, wherein at least a part of the mesh of wires is arranged within the terminal contact portion.
8. The battery module according to any one of embodiments 6 or 7, whereby the busbar is entirely formed as a mesh of wires.
9. A battery module for a propulsion battery system of an electrical vehicle, comprising
   a. a plurality of battery cells, each battery cell comprising an anode, a cathode, an electrolyte and electrical terminals, and
   b. a busbar for electrically and mechanically connecting two terminals of two different battery cells of the plurality of battery cells with each other, the busbar comprising
      i. a terminal contact portion for connecting the busbar to one of the two terminals, the terminal contact portion comprising connection means for connecting the busbar to the terminal, and
      ii. at least two channels extending from a surface of the busbar into the busbar, thereby forming a passageway for a cooling fluid.
10. The battery module according to embodiment 9, wherein at least one of the channels is at least partially arranged within the terminal contact portion.
11. The battery module according to any one of embodiments 9 or 10, wherein the busbar comprises two terminal contact portions and wherein at least one of the channels extends from one terminal contact portion to another terminal contact portion of the busbar.
12. The battery module according to any one of embodiments 9 to 11, wherein the busbar comprises two surfaces and wherein at least one of the channels extends from one surface to another surface of the busbar.
13. The battery module according to any one of embodiments 9 to 12, wherein at least one of the channels extend from one surface into the busbar and back to said surface of the busbar.
14. The battery module according to any one of embodiments 9 to 13, wherein at least one of the channels exhibits a cross-section of rectangular shape, circular or semi-circular shape, triangular shape, elliptical or semi- elliptical shape or w-shape.
15. The battery module according to any of one embodiments 9 to 14, wherein the channels are straight and are arranged parallel to each other.
16. The battery module according to anyone of embodiments 1 to 15, wherein the busbar comprises a non-conductive material and conductive elements thereon and/or therein.
17. The battery module according to anyone of embodiments 1 to 16, whereby the busbar has an elongated shape defining a rectangular cross-section, the cross-section having a width and a height, wherein the height-to-width aspect ratio of the cross-section is between 1:20 and 1:5.
18. The battery module according to anyone of embodiments 1 to 17, wherein the battery module contains a cooling fluid comprising a dielectric liquid.
19.A battery system comprising a battery module according to any one of embodiments 1 to 18.
20.An electrical or hybrid-electrical vehicle comprising a battery system according to embodiment 19.

## Claims

1. A battery module (100, 101) for a propulsion battery system (10) of an electrical or hybrid-electrical vehicle, comprising
a. a plurality of battery cells (110, 111, 112, 113, 120, 121, 122, 123), each battery cell (110, 111, 112, 113, 120, 121, 122, 123), comprising an anode, a cathode, an electrolyte and electrical terminals (116, 117, 118, 119),
b. a busbar (130, 131, 132) for electrically and mechanically connecting two terminals (116, 117, 118, 119) of two different battery cells (110, 111, 112, 113, 120, 121, 122, 123), of the plurality of battery cells (110, 111, 112, 113, 120, 121, 122, 123), with each other, the busbar (130, 131, 132) comprising
i. a terminal contact portion (130a, 130b, 130a', 130b', 131 a, 131 b, 132a, 132b) for connecting the busbar (130, 131, 132) to one of the two terminals (116, 117, 118, 119), the terminal contact portion (130a, 130b, 130a', 130b', 131a, 131b, 132a, 132b) comprising connection means for connecting the busbar (130, 131, 132) to the terminal (116, 117, 118, 119), and
ii. a major surface (131c, 132c) for contacting a cooling fluid, wherein the major surface (131 c, 132c) exhibits a plurality of recesses (160) or a plurality of protrusions (150), to provide a larger contact area between the busbar (130a, 130b, 130a', 130b', 131a, 131b, 132a, 132b) and the cooling fluid,
wherein at least a part of one of the recesses (160) or protrusions (150) is arranged within the terminal contact portion (130a, 130b, 130a', 130b', 131a, 131b, 132a, 132b).

2. The battery module (100, 101) according to claim 1, wherein the major surface (131c) exhibits a plurality of protrusions (150) and wherein the protrusions (150) integrally formed with the busbar (130, 131).

3. The battery module (100, 101) according to any one of claims 1 or 2, wherein the major surface (132c) exhibits a plurality of recesses (160), wherein at least one of the recesses (160) is formed as a groove (162).

4. The battery module (100, 101) according to any one of claims 1 to 3, wherein the major surface (131c) exhibits a plurality of protrusions (150), wherein at least one of the protrusions (150) is formed as a ridge (152).

5. A battery module (100, 101) for a propulsion battery system (10) of an electrical or hybrid-electrical vehicle, comprising
a. a plurality of battery cells (110, 111, 112, 113, 120, 121, 122, 123), each battery cell (110, 111, 112, 113, 120, 121, 122, 123) comprising an anode, a cathode, an electrolyte and electrical terminals (116, 117, 118, 119), and
b. a busbar (133, 134) for electrically and mechanically connecting two terminals (116, 117, 118, 119) of two different battery cells (110, 111, 112, 113, 120, 121, 122, 123) of the plurality of battery cells (110, 111, 112, 113, 120, 121, 122, 123) with each other, the busbar (133, 134) comprising
i. a terminal contact portion (133a, 133b, 134a, 134b) for connecting the busbar (133, 134) to one of the two terminals (116, 117, 118, 119), the terminal contact portion (133a, 133b, 134a, 134b) comprising connection means for connecting the busbar (133, 134) to the terminal (116, 117, 118, 119), and
ii. a mesh (200, 200') of wires (202, 202') for contacting a cooling fluid.

6. The battery module (100, 101) according to claim 5, wherein at least a part of the mesh (200, 200') of wires (202, 202') is arranged within the terminal contact portion (133a, 133b, 134a, 134b).

7. The battery module (100, 101) according to any one of claims 5 or 6, whereby the busbar (134) is entirely formed as a mesh (200') of wires (202').

8. A battery module (100, 101) for a propulsion battery system (10) of an electrical or hybrid-electrical vehicle, comprising
a. a plurality of battery cells (110, 111, 112, 113, 120, 121, 122, 123), each battery cell (110, 111, 112, 113, 120, 121, 122, 123) comprising an anode, a cathode, an electrolyte and electrical terminals (116, 117, 118, 119), and
b. a busbar (135, 136, 137, 138, 139, 140) for electrically and mechanically connecting two terminals of two different battery cells (110, 111, 112, 113, 120, 121, 122, 123) of the plurality of battery cells (110, 111, 112, 113, 120, 121, 122, 123) with each other, the busbar (135, 136, 137, 138, 139, 140) comprising
i. a terminal contact portion (135a, 135b, 136a, 136b, 137a, 137b, 138a, 138b, 139a, 139b, 140a, 140b) for connecting the busbar (135, 136, 137, 138, 139, 140) to one of the two terminals (116, 117, 118, 119), the terminal contact portion (135a, 135b, 136a, 136b, 137a, 137b, 138a, 138b, 139a, 139b, 140a, 140b) comprising connection means for connecting the busbar (135, 136, 137, 138, 139, 140) to the terminal, and
ii. at least two channels (210, 211, 212, 213, 214, 215) extending from a surface of the busbar (135, 136, 137, 138, 139, 140) into the busbar (135, 136, 137, 138, 139, 140), thereby forming a passageway for a cooling fluid.

9. The battery module (100, 101) according to claim 8, wherein at least one of the channels (210, 211, 212, 213, 214, 215) is at least partially arranged within the terminal contact portion (135a, 135b, 136a, 136b, 137a, 137b, 138a, 138b, 139a, 139b, 140a, 140b).

10. The battery module (100, 101) according to any one of claims 8 or 9, wherein the busbar (135, 136, 137, 138, 139) comprises two surfaces and wherein at least one of the channels (210, 211, 212, 213, 214) extends from one surface to another surface of the busbar (135, 136, 137, 138, 139).

11. The battery module (100, 101) according to any one of claims 8 to 10, wherein at least one of the channels (210, 211, 212, 213, 214) exhibits a cross-section of rectangular shape, circular or semi-circular shape, triangular shape, elliptical or semi- elliptical shape or w-shape.

12. The battery module (100, 101) according to any one of claims 1 to 11, whereby the busbar (130, 131, 132, 133, 134, 135, 136, 137, 138, 139, 140) has an elongated shape defining a rectangular cross-section, the cross-section having a width and a height, wherein the height-to-width aspect ratio of the cross-section is between 1:20 and 1:5.

13. The battery module (100, 101) according to any one of claims 1 to 12, wherein the battery module (101, 101) contains a cooling fluid comprising a dielectric liquid.

14. A battery system (10) comprising a battery module (100, 101) according to any one of claims 1 to 13.

15. An electrical or hybrid-electrical vehicle comprising a battery system (10) according to claim 14.
